# EUROPEAN PATENT SPECIFICATION

(11) **EP 2 701 416 B1**
(45) Date of publication and mention of the grant of the patent: **26.04.2017**
(21) Application number: 13181450.1
(22) Date of filing: 23.08.2013
(51) Int. Cl.: G06Q 20/32, H04L 29/06, G06Q 20/22, G06Q 20/34, G06Q 20/38, G06Q 20/40, H04L 9/32, H04W 12/08, H04W 12/04, G06F 21/62

(54) **Mobile Electronic Device And Use Thereof For Electronic Transactions**
Mobile elektronische Vorrichtung und ihre Verwendung für elektronische Transaktionen
Dispositif électronique mobile et son utilisation pour des transactions électroniques

(30) Priority: 24.08.2012 EP 12181700
(43) Date of publication of application: 26.02.2014
(73) Proprietor: Kuppuswamy, Raja, 80333 München (DE)
(72) Inventor: Kuppuswamy, Raja, 80333 München (DE)
(74) Representative: Ettmayr, Andreas

(56) References cited:
- US-A1- 2007 297 610
- US-A1- 2011 185 186
- US-A1- 2012 143 767

## Description

The present invention relates to mobile electronic devices. In particular, the present invention relates to a mobile electronic device comprising wireless communication means for connecting to a wireless network, memory means for storing data, and encryption and decryption means for encrypting and decrypting data stored in the memory means. Further, the invention relates to a method of authorizing a user for an electronic transaction using a mobile electronic device and a method for registering a user therefor.

Mobile electronic devices of the type initially mentioned are in widespread use in many different configurations, such as smartphones and tablet computers. Typically, a user can install and run so-called "apps" on mobile electronic devices which are application programs adapted to the runtime environment of the respective mobile electronic device and which can be downloaded via the wireless network for installation.

In recent times, there have been made increasing efforts to establish mobile electronic devices as a means for use in payment transactions due to certain drawbacks of conventional ways to conduct payment transactions, as discussed hereinafter, and due to the fact that an increasing number, if not the majority, of consumers carry mobile electronic devices almost wherever they go.

Among the numerous different payment instruments for carrying out financial transactions, credit cards and debit cards have become increasingly popular. The growth of electronic commerce has attributed thereto as well as the convenience of not having to count change. It is not uncommon for consumers to hold multiple credit card and/or debit card accounts concurrently. For example, a consumer may use one account for private domestic expenses, one for travel related expenses and another one for business related expenses. Further, as not all cards are accepted by all retailers, service providers etc., a user may hold additional accounts at different credit card companies. Since the number of payment accounts held per consumer increases, however, it has become increasingly inconvenient to carry such a large number of credit cards or debit cards. It is thus desirable to replace a number of plastic cards that may make wallets too bulky to be conveniently carried in pockets by respective functions in a mobile electronic device the consumer carries anyway.

As mobile electronic devices nowadays are typically connectable to the internet and have web browsers installed thereon, internet payment methods conventionally carried out using PCs are in principle also feasible for mobile electronic device users. However, the ease of use as well as the achievable degree of security may be quite different depending on whether a conventional internet payment method is carried out on a PC in a more private environment or in the public on a mobile electronic device. E.g. entering account information and access codes such as a PIN into a device is achieved much more easily sitting at a desk with both hands free and without the risk of strangers watching than standing among other people holding a mobile electronic device in one hand.

In electronic commerce, payment sites are operated offering consumers to store account data of several credit card or banking accounts in a single payment service account. When willing to initiate an electronic payment transaction, the user logs into his payment service account, typically entering a username and a password, selects the credit card or banking account through which the user wishes to process the payment, either enters additional payment details or checks electronically imported payment details before confirming payment. Often, an additional code verifying the user's authorization, such as the three or four digit security number printed on credit cards and often referred to as Card Validation Code (CVC), Card Verification Value (CVV) or Card Security Code (CSC).

US 2008/0319875 A1 discloses a system for facilitating payment transactions using mobile electronic devices enabling payments not only from a consumer to a professional provider of services or goods such as a store but also "peer to peer" from one holder of a mobile electronic device to another holder of a mobile electronic device. Therein, all relevant account data is stored in a remote server. The mobile electronic devices involved in a transaction basically function as terminals for accessing the accounts.

In recent times, consumers begin to develop reservations against electronic payment methods. In particular, they fear that their relevant account and security data may be accessed by third parties with criminal intent. Such concerns are not always unfounded. E.g. servers storing relevant data may be hacked. The media reported repeatedly about sets of credit card data stolen from servers by the thousands. Further, so-called "phishing methods" simulate payment platforms prompting the user to enter relevant security data which is then, unnoticed by the user, transferred to a third party thus enabled to access the user's account.

US 2012/0143767 A1 discloses a system trying to take into account such concerns, wherein a user's personal payment information is stored on that user's computing device in encrypted form, but no centralized list of credit card numbers belonging to one or more users is ever created on a single server. Instead, a payment management server only maintains a listing of known users and known devices and manages encryption and decryption keys used to access personal payment information. The payment management server determines whether known users should be allowed access to decrypted personal payment information through use and release of decryption keys. Thus, a central server transmits key information to a user's device in order to allow access to payment information stored in the device.

However, if a session between the application running on the user's device and the payment management server is hijacked during a registration or during initiation of a payment request, an unauthorized third party may get hold of encryption/decryption keys. Due to the storage of the encryption and decryption keys on the payment management server, the system is still vulnerable for attack that may result in payment data being stolen. Since one channel is used for payment request, decryption of the payment information and also forwarding the payment information to the payment scheme, the entire system depends on the security of this one channel. Further, the above known system allows sharing security relevant data between different user devices as well as different applications on the same or different user devices. User's payment information may thus be received by an unauthorized third party and misused. In addition, the above system allows to store the encrypted payment information on a cloud which gives a one point access to all encrypted data and along with the encryption keys stolen from another central storage may give access to all the payment information.

It is therefore one object of the present invention to eliminate or at least diminish the drawbacks of conventional payment methods. In particular, it is an object of the present invention to provide a secure and comfortable way of managing multiple transaction instruments.

In view of the above, the present invention provides, according to one aspect thereof, a mobile electronic device comprising wireless communication means for connecting to a wireless network, memory means for storing data, and encryption and decryption means for encrypting and decrypting data stored in the memory means, wherein the data includes, in encrypted form, a plurality of token data sets for enabling user authorization for an electronic transaction. The token data sets of the plurality of token data sets are adapted for mutually different transactions. The mobile electronic device further comprises enabling means for establishing, via the wireless communication means and the wireless network, a connection to a remote server for verifying the user's authentication to access the token data sets and for enabling access to the token data sets, if the user's authentication is verified based on a device specific ID stored on the mobile electronic device, a personal ID to be input by the user and verifying data supplied by the remote server. The enabling means comprises key generating means for generating a key necessary for decrypting the token data sets, wherein said key is generated from said device specific ID, said personal ID and said verifying data. Further, the mobile electronic device comprises selection means for allowing a the user to select a token data set from the plurality of token data sets for access, and output means for outputting authorizing information for authorizing an electronic transaction based on the selected token data set.

According to another aspect of the present invention, a system for authenticating a user for an electronic transaction is provided which comprises a mobile electronic device as described above and the remote server.

A plurality of transaction site servers (e.g. servers of clearing institutes or payment organizations like credit card companies, banks etc.) have stored thereon complementary data sets, each corresponding to a respective one of the token data sets. Preferably, the transaction site servers are adapted to receive the authorizing information from the mobile electronic device and to transmit an authorization response from the transaction site server to the remote server.

According to one advantageous embodiment, the system may also make use of an external terminal including user ID input means for inputting a user ID and of transfer means for transferring the input user ID from the external terminal to the mobile electronic device, wherein the input user ID is used in verifying the user's authentication.

According to another aspect of the present invention, a method of authorizing a user for an electronic transaction is provided. The method comprises the step of establishing, via a mobile electronic device connected to a wireless network, a connection to a remote server for verifying the user's authentication to access a plurality of token data sets stored, in encrypted form, in the mobile electronic device, wherein verifying the user's authentication is based on a device specific ID stored in said mobile electronic device, a personal ID to be input by the user and verifying data supplied by the remote server. The method further comprises the steps of enabling access to the token data sets, if the user's authentication is verified, selecting, among the plurality of token data sets, a token data set, outputting authorizing information for authorizing an electronic transaction based on the selected token data set, wherein the token data sets of the plurality of token data sets are adapted for mutually different transactions. Therein, a key for decrypting the token data sets is generated from the device specific ID, the personal ID and the verifying data.

In this manner, i.e. by generating a key for decrypting the token data sets from the device specific ID, the personal ID and the verifying data, a very high level of security is achieved by requiring data from three different sources (device, user input, remote server) in order to allow decryption of the token data sets.

The verifying data may either be stored on the remote server and accessed either using a user specific ID or a device specific ID or both, or it may be generated on the remote server based on user specific ID or device specific ID or both. Typically the verifying data may be looked at as a server key or a server ID.

Advantageously, access of the token data sets can be access code protected, i.e. the user can use the selection means or the selected token data set only after entering a personal ID such as a PIN or password. While the user can conveniently select among various payment methods having to remember only one access code, a third party cannot authorize payments from the user's accounts, even if the personal ID gets stolen (e.g. by watching the user enter it in public), unless using the user's very mobile electronic device. The access code is worthless for use on a different device.

Instead of or in addition to a personal ID code such as a PIN or a password, access of the token data sets may also be protected by biometric methods, e.g. a fingerprint scanner. In the context of this application, inputting a fingerprint, iris scan, voice sample or the like is thus also to be considered inputting a personal ID. The skilled person will readily understand that mobile electronic devices having biometric user identification and authentication means may be adapted accordingly.

Advantageously, the token data sets are not stored on the remote server and can thus not be accessed by hacking the server. Preferably, the token data sets are also not transmitted through the remote server, so that not only an attack on the remote server but also an attack on the data transmission between the mobile electronic device and the remote server cannot yield access to the token data sets.

It also advantageous not to store the key on the server. Instead, it is advantageously generated anew from the device specific ID, the personal ID and the verifying data, whenever the key is needed for decryption: The encryption key is not stored anywhere either on the mobile electronic device or on the remote server and it is generated all the time on the mobile electronic device and destroyed on the mobile electronic device once the encryption is completed.

In a preferred embodiment, the electronic transaction is an electronic payment transaction, the plurality of token data sets is adapted for mutually different payment methods, and the authorizing information is payment authorizing information for authorizing an electronic payment transaction. Thus, the present invention makes it possible to store all relevant data for authorizing an electronic payment on the user's individual electronic device. While the respective token sets can only be accessed if authentication is verified by a remote server, the remote server does not store any data of the payment account. By hacking a server the user's account data thus cannot be accessed but remains safe.

While the invention is described focussing on the electronic transaction being an electronic payment transaction, the plurality of token data sets being adapted for mutually different payment methods, and the authorizing information being payment authorizing information for authorizing an electronic payment transaction, the invention may also be advantageously carried out for other types of electronic transactions. For example, instead of relating to payment accounts, the token data sets of the present invention may include access data for other electronic accounts, e.g. passwords for social networks or company servers, access codes for telephone networks or conference servers, service codes for electronic equipment or the like.

According to an advantageous embodiment, the invention can make use of a payment card similar to a conventional payment card, like credit or debit cards with a magnetic strip or an on-card chip. However, instead of holding multiple credit and debit cards, the user may then hold one single card instead of multiple cards. In such an embodiment, the payment card serves only for identifying a prepaid account of the holder to be debited (instead of directly debiting a bank account or credit card account of the user), whereas the mobile electronic device authorizes a transaction from any credit card account, bank account or the like to the prepaid account.

In a preferred embodiment, the output means include means for transmitting the authorizing information via the wireless communication means and the wireless network. The mobile electronic device may then be used in all instances where conventional internet payment methods have been useful, e.g. payments to online retailers or (ticket, hotel etc.) booking platforms. Therein, the authorizing information is preferably transmitted to the respective transaction server (e.g. of a bank or credit card company) without being transmitted through the remote server. Thus it is avoided that the authorizing information can ever be accessed by hacking the remote server.

In a particularly advantageous embodiment, a first app stored on the mobile electronic device is used for initiating contact with the remote server and a second app stored on the mobile electronic device is used for generating the key, allowing the user to select a token data set from said plurality of token data sets for access, and outputting said authorizing information. The first app which initiates the payment request can be any third party application (either a web based application or smartphone based application) receives from the user only either an email-ID or mobile phone number or any kind of identification which was registered during a registration process of the first app which initiates the authorization request to the payment processing companies (transaction site servers). The first app will send the email-ID or mobile phone number or any kind of identification and other payment request information like merchant ID, amount of the transaction, reason and other information necessary for the execution of the payment transaction except the personal payment information to the remote server. When the remote server receives the data from the first app (payment request initiation application), it will check whether the email-ID or mobile-phone or any kind of identification is already known. If it is unknown the transaction is rejected. If it is known then the remote server will check the device and application information related email-ID or mobile phone number or any kind of identification and will send a notification message using (SMS based or Vendor specific messaging like Cloud to Device messaging or Apple^{™} Messaging) to the mobile electronic device (e.g. smartphone). When the device user selects the message, it automatically will open the second app which initiates the authorization request to the payment processing company (transaction site server). The user will have a choice to check the message and reject the message or accept the message. When the user rejects the message, the transaction is cancelled. When the user accepts the message, the user has to provide the PIN or password. The second app connects to the remote server and retrieves all the payment request information (like merchant id, amount of the transaction, reason and other information) for the particular transaction along with the server-key from the remote server. The PIN or Password, the device specific key and the sever_key is used to decrypt the encrypted personal payment information on the mobile electronic device and show the user to select one of the payment methods (token data sets). Once the payment method is selected, the second app will send all the payment request information and decrypted and selected personal payment information to the payment processing company (transaction site server) for authorization (this can be via a payment gateway or any kind of payment aggregation platforms). Once the payment is authorized, the second app will then send the corresponding status without any personal payment information to the remote server and request for a one time challenge and response key (transaction confirmation code) only if the authorization is successful. The remote server will send a challenge and response key (Transaction confirmation code) back to the second app. The user has to manually read the challenge and response key (transaction confirmation code) and enter it into the second app (payment request application) to confirm the payment. The second app (payment request application) validates the challenge and response key (transaction confirmation code) by sending it to the remote server and once validated successfully the payment is completed successfully.

This is a two factor authorization process using two independent channels of communication. In this advantageous embodiment, the remote server does not communicate authorization data to the payment processing companies (transaction site servers) but only facilitates the communication between the first app (payment request initiation application) and the second app (application which does the authorization to the payment processing company). The important point also is there is no necessity for the user to provide any personal payment information on any third party application which initiates the payment request. The present invention can also work between a web based system or app based system or even point-of-sale system with the first app (application which authorizes the payment with the payment schemes). It fully prevents that the first app (third party application) should need any data security standards and certifications as there is no personal payment information received by such applications. This is also a major advantage.

In other words: the initiation of the payment request is done from a separate application and not from the same application which is responsible for encrypting, decrypting and storing the personal payment information on the mobile device. There is only one certified application which is responsible for generation of the encryption/decryption key, encryption and decryption of the personal payment information and storage of the personal payment information on the mobile device. This application is supplied by the vendor who is also responsible for the remote server. But the initiation of payment request can come from various applications on the mobile device or even from a web application on a desktop PC or other computer device. There is no sharing of personal payment information between the application which is used by the user to initiate a payment transaction and the application which is responsible for generation of the encryption/decryption key, encryption and decryption of the personal payment information and storage of the personal payment information on the mobile device. After the payment information are decrypted by the one certified application, the same application also sends the personal payment information to the payment processing companies directly and not via the remote server or via any other application.

According to another aspect, the present invention also provides a method for registering a user for authorizing the user for electronic transactions. The method comprises the steps of establishing, via a mobile electronic device connected to a wireless network, a connection to a remote server, creating, on the remote server, user verifying data using a personal ID specific to the user and/or a device specific ID stored on the mobile electronic device, storing on the mobile electronic device, in encrypted form, a plurality of token data sets for authorizing the user in the electronic transactions, wherein the token data sets are stored such that they are accessible only using a key generated from the user verifying data personal ID and device specific ID, wherein token data sets of said plurality of token data sets are adapted for mutually different transactions. The key is not stored on the remote server.

Preferably, the above app for generating the key, allowing the user to select a token data set from the plurality of token data sets for access, and outputting authorizing information for authorizing an electronic transaction based on the selected token data set is downloaded from the remote server to the mobile electronic device.

The present invention not only facilitates selective use of multiple token data sets (such as credit card details and the like) and increases at the same time the achievable level of security. The present invention also allows implementation of highly useful operations: When the electronic mobile device gets lost or stolen, it is possible to block, via the remote server, access to the stored token data sets. For this, it is only necessary to configure the remote server to deny user authentication, if a connection to the remote server is established by enabling means of a mobile electronic device that has been reported lost or stolen.

Generally, any of the embodiments described or options mentioned herein may be particularly advantageous depending on the actual conditions of application. Further, features of one embodiment may be advantageously combined with features of another embodiment as well as features known per se from the prior art as far as technically possible and unless indicated otherwise.

The invention will now be described in more detail. The accompanying drawings, which are purely schematic illustrations, serve for a better understanding of the features of the present invention. Therein:
- Fig. 1: shows, schematically and not drawn to scale, a mobile electronic device according to an advantageous embodiment of the present invention.
- Fig. 2: shows a flow scheme of a registration procedure for registering a mobile electronic device for payment transactions according to the present invention.
- Fig. 3: shows a flow scheme of a payment transaction flow using the mobile electronic device in e-commerce.
- Fig. 4: shows a flow scheme of a payment transaction using an inventive mobile electronic device at a point of sale employing a payment card.
- Fig. 5: shows another flow scheme of a payment transaction using an inventive mobile electronic device at a point of sale employing a payment card.
- Fig. 6: shows a flow scheme of a payment transaction at a point of sale or peer to peer using near field communication (NFC) or radio frequency identification (RFID) techniques.
- Fig. 7: shows a flow scheme of a payment transaction at a point of sale or peer to peer using matrix bar code techniques.
- Fig. 8: shows a flow scheme of a payment transaction at a point of sale terminal using the PIN keypad of the point of sale terminal.

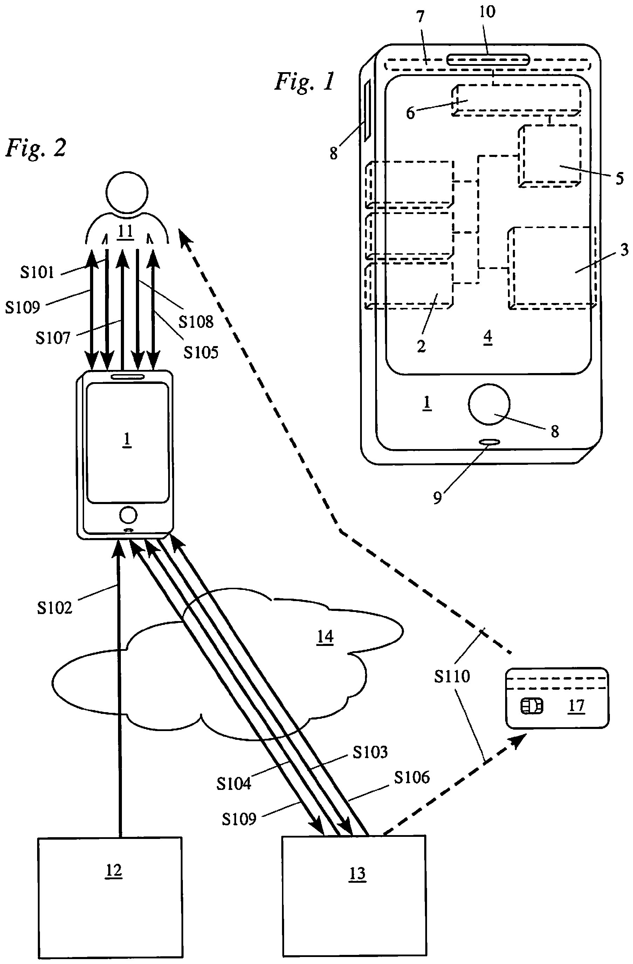

Fig. 1 shows a schematic diagram of a mobile electronic device 1 according to an advantageous embodiment of the present invention. Typically, such as the device 1 shown, a mobile electronic device 1 according to present invention may be based on a conventional smartphone or tablet computer or the like, wherein the encryption and decryption means, enabling means and selection means are implemented in software stored in the memory 2 of the device 1 and executed by the processor 3 of the device 1 controlling conventional hardware components, in particular a touch screen display 4, a wireless I/O unit 5 connected to a receiver/transmitter device 6 with an antenna 7, one or more hardware buttons 8, a microphone 9, a speaker 10 and other components which are per se well known to the skilled person for operating a mobile electronic device 1.

Typically, the mobile electronic device 1 has installed thereon system software conventionally known for operation of smartphones, tablet computers or the like and capable of running apps downloaded via the internet using a wireless local area network (WLAN) access point or a mobile telephone network, e.g. according to UMTS or LTE standard. Further, for operating the mobile electronic device 1 has installed thereon a graphical user interface (GUI), which is operable using the touch screen display 4, as known per se from conventional mobile electronic devices.

The function of the inventive features in connection with the standard hardware of the mobile electronic device 1 will become apparent from the following.

Fig. 2 shows a flow scheme of a registration procedure. A user 11 initiates, through a conventional internet browser or proprietary downloading utility program, download of a payment app (Step S101) adapted for carrying out, once installed, the functions of the enabling means and selection means according to the present invention as described herein. The mobile electronic device 1 downloads, from a server 12 via the wireless network 14 and installs the payment app (Step S102). When first used, the app prompts the user, on the display 4, to register inputting user information such as the user's 11 first name, last name, date of birth, email ID and MSISDN / mobile phone number information. The app generates a public unique ID to identify the device and stores the public unique device ID in the memory 2 of the mobile electronic device 1. The payment app is registered to any cloud messaging service and a registration confirmation ID is received.

The payment app establishes, via the wireless I/O unit 5, a connection of the mobile electronic device 1 to a remote server 13 (Step S103), and the basic user information, public unique device ID, and messaging service registration confirmation ID are sent to a gateway system installed on the remote server 13 in an XML data format along with a hash signature.

The gateway system, upon receiving the XML data, verifies the hash signature, creates a user scheme data from user information, public unique device ID, and messaging service registration confirmation ID along with a server key (verifying data) and stores it in a database.

Then, the gateway system creates a verification code with a status "email not verified", sends a verification email to the user's 11 email address (step not illustrated in Fig. 2), and the registration response with "email not verified" status to the payment app on the mobile electronic device 1 (Step S104).

The payment app updates the registration status and shows, on the display 4, the message that the user 11 has to verify the email address to complete the registration process (Step S105). When the user 11 opens the email and selects a respective link (step not illustrated in Fig. 2), the gateway system updates the status of the verification code to "email verified" and sends a respective message via messaging service using the registration confirmation ID to the electronic mobile device 1 (Step S106).

Upon receiving the message, the payment app updates the registration status to "email verified" and shows, on the display 4, a notification message to the user 11 to complete registration. Before further using the payment app, the user 11 is prompted, on the display 4, to enter an individual password or PIN (minimum 4 digits) for future use by the user 11 (Step S107). Whenever the user 11 wishes to use the payment app, he may open the payment app e.g. by finger-pointing a respective icon on the touch screen display 4 and will then be prompted to enter his individual password or PIN for access.

The payment app will use the individual password or PIN and a device key, which is always generated from mobile electronic device information at runtime and not stored on the mobile electronic device 1, to encrypt the public unique device ID and store it in the memory 2.

The user 11 can now enter and store in the memory 2 token data sets representing payment instrument details necessary for authorizing a payment transaction using the respective payment instrument, e.g. credit card or debit card. In order to create a respective token data set, the user enters payment instrument details such as respective card number, holder name, respective CW, respective PIN, respective expiry date etc. into a respective data input mask displayed on the display 4 (Step S108).

When the user 11 selects to save the token data sets in the memory 2, the payment app establishes, via the wireless network 14, a connection to the gateway system on the remote server 13, the payment app prompts, on the display 4, the user 11 to re-enter the individual password or PIN (only if the session has expired), the payment app decrypts the public device identifier stored in the memory 2 using the individual password or PIN and the device key and sends the public device identifier and the user's 11 email ID to the gateway system. On successful identification of the user scheme data using the public unique device ID and the email ID of the user 11, the gateway system sends the server key (verifying data) to the payment app as response (Step S109).

For storing the token data sets in the memory 2, the payment app creates a 128 Bit key from the device key, individual password or PIN and the server key and encrypts the token data sets using advanced encryption messages, e.g. Rijndael algorithms.

The token data sets representing the payment instrument details are stored only on the device 1 but neither transmitted to nor stored in the remote server 13. Neither is the created 128 Bit key ever sent to nor stored on the remote server. The created 128 Bit key is not stored permanently on the device 1 either but needs to be created anew every time the payment app is used for payment.

If the user 11 wants to use a payment card 17 for use in common card readers, he may, in the registration process, enter some additional details like shipping address details and required KYC (know your customer) information then transmitted via the wireless network 14 to the gateway system on the remote server 13. A respective payment card 17 will then be sent to the user's address (Step S 110).

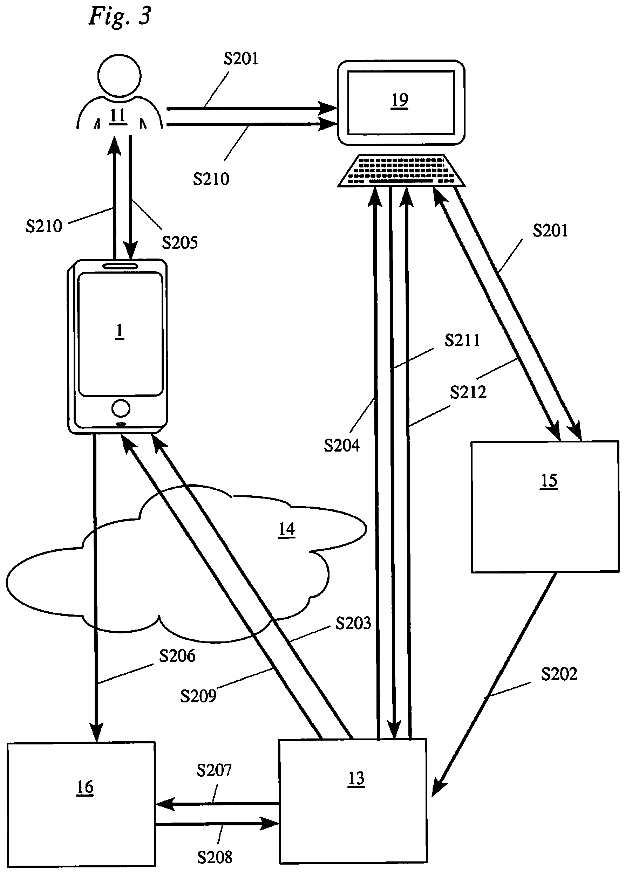

Fig. 3 shows a flow scheme of a payment transaction flow using the mobile electronic device 1 in e-commerce, e.g. with an internet retailer or an online ticket booking platform.

The user 11 accesses and communicates with the e-commerce site 15 using a device other than the mobile electronic device 1, e.g. a personal computer 19 with an internet browser. Optionally, the user 11 may access the e-commerce site via the wireless network 14 in the same manner as communication with such sites is conventionally achieved using mobile electronic devices, i.e. using a respective app or browser installed on the mobile electronic device.

The user 11 selects use of his electronic mobile device 1 as payment method during the payment process to the e-commerce site 15 and enters only his mobile number or email ID along with a CAPTCHA (Step S201).

The payment request is sent or forwarded from the e-commerce site 15 to the gateway system on the remote server 13 (Step S202).

The gateway system sends a payment notification message to the electronic mobile device 1 (Step S203) and transmits to the personal computer 19 a challenge and response page displayed by a browser and prompting the user 11 to enter a response for payment confirmation (Step S204).

The user 11 starts the payment app e.g. by selecting the notification message or by finger-pointing a respective icon on the touch screen display 4. The user can accept the payment and enter his individual password to access a menu displayed on the display 4 for selecting his desired payment method (i.e. payment instrument) and accept to send the details for authorization (Step S205). The electronic mobile device 1 sends the payment details to the payment processing company 16 for authorization (Step S206).

As is clear from the above, in order to access the respective token data set required for authorization and stored on the mobile electronic device 1, a respective key is used which is created from the device key, the individual password and the verifying data provided by the remote server 13.

The gateway system connects with the payment processing company 16 corresponding to the selected payment method (Step S207) and receives an authorization response from the respective payment processing company 16 (Step S208). Upon successful authorization, the gateway system sends, via the wireles network 14, a one time transaction confirmation number (TCN) to the mobile electronic device 1 (Step S209).

The user 11 enters the transaction confirmation number on the challenge and response page displayed by the personal computer 19 (Step S210). The response is forwarded to the gateway system for verification and validation (Step S211). The gateway system verifies and validates the TCN, completes the payment process and redirects the browser of the personal computer 19 back to the success or failure page of the e-commerce site (Step S212).

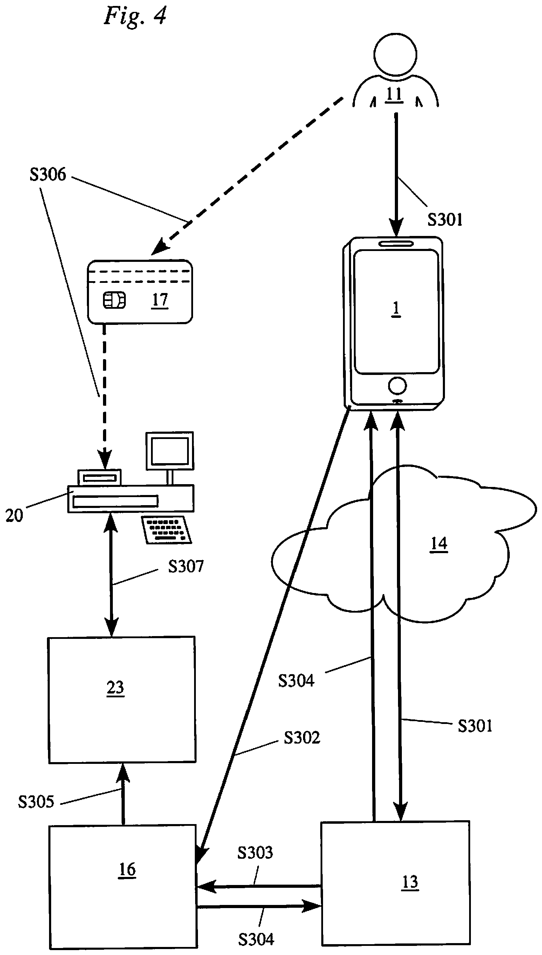

Fig. 4 shows a flow scheme of a payment transaction using the mobile electronic device 1 at a point of sale 20 employing a payment card 17.
The user 11, who wants to load a specific amount onto the payment card, opens the payment app using his individual password, selects on a menu a load function with a specific amount to the payment card, selects the payment method and accepts to send the payment details (Step S301). As is clear from the above, in order to access the respective token data set required for authorization and stored on the mobile electronic device 1, a respective key is used created from the device key, the individual password and the server key (verifying data) provided by the gateway system (remote server 13).

The token data set representing the payment details is sent via the wireless network 14 to the payment processing company 16 for authentication and authorization (Step S302).

The gateway system connects with the payment processing company 16 corresponding to the selected payment method (Step S303) and receives an authorization response from the respective payment processing company 16 (Step S304) which is forwarded to the mobile electronic device 1 which displays a confirmation. Upon successful authorization, the specified amount is transferred from the payment processing company 16 to a user's prepaid account 23 (Step S305). Implementations are possible wherein the prepaid account 23 is managed by the remote server 13 as well as implementations wherein the prepaid account 23 is managed by the server of a designated financial institution.

The user 11 can then use the payment card 17 like a conventional prepaid card to pay at any point of sale 20 for the amount equal or less than the amount available on the prepaid account 23 (Step S306). Therein, the on-card chip 18 of the payment card 17 serves for identifying the prepaid account 23 to the point of sale 20. The point of sale 20 connects to the server managing the prepaid account 23 in order to complete a payment (Step S307).

The user 11 can repeat the process for reloading the payment card.

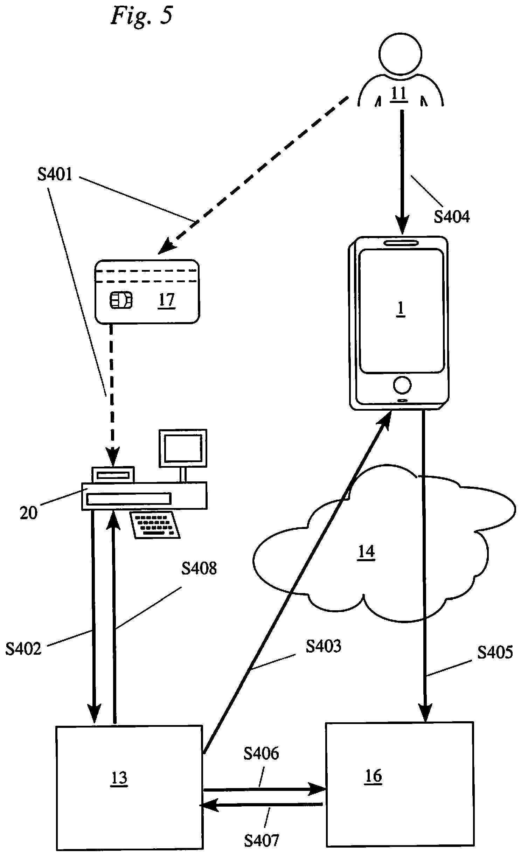

Fig. 5 shows another flow scheme of a payment transaction using the mobile electronic device 1 at a point of sale 20 using the payment card 17.

The user 11 inserts the payment card 17 into a conventional card reader at the point of sale 20 (Step S401). The point of sale 20 sends card and payment information to the gateway system on the remote server 13 (Step S402). The gateway system sends, via the wireless network 14, a payment notification message to the user's 11 mobile electronic device 1 (Step S403).

The user 11 starts the payment app e.g. by selecting the notification message or by finger-pointing a respective icon on the touch screen display 4. The user can accept the payment and enter his individual password to access a menu displayed on the display 4 for selecting his desired payment method (i.e. payment instrument), e.g. credit card payment, and accept to send the details for authorization (Step S404). As is clear from the above, in order to access the respective token data set required for authorization and stored on the mobile electronic device 1, a respective key is used created from the device key, the individual password and the verifying data provided by the gateway system (remote server 13).

The electronic mobile device 1 sends the payment details to the payment processing company for authorization (Step S405).

The gateway system connects with the payment processing company 16 corresponding to the selected payment method (Step S406) and receives an authorization response from the respective payment processing company 16 (Step S407). Upon successful authorization, the gateway system sends an authorization response to the merchant, i.e. the point of sale 20 (Step S408).

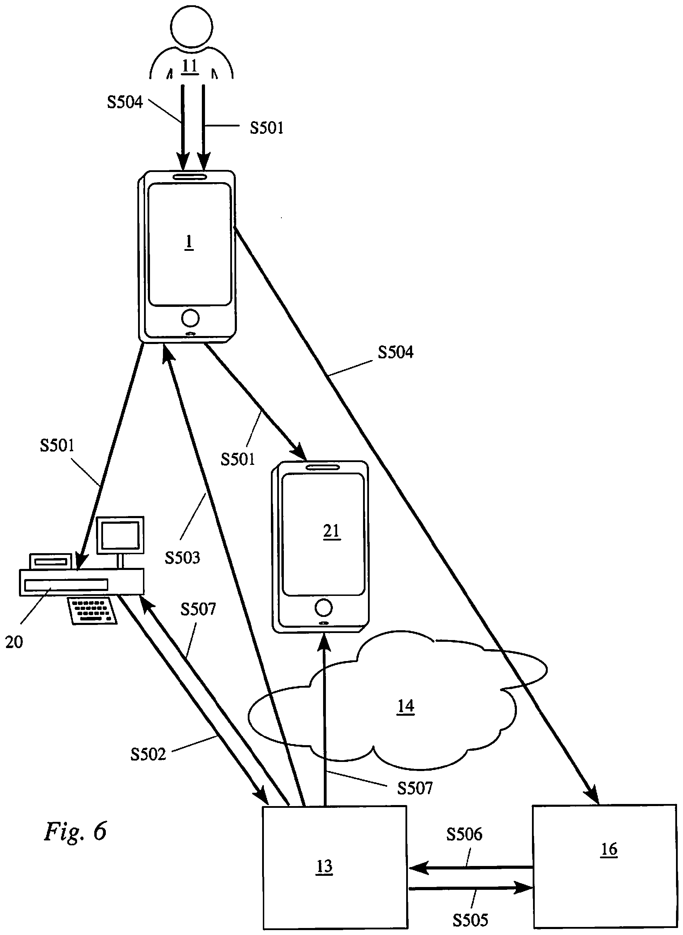

Fig. 6 shows a flow scheme of a payment transaction at a point of sale or peer to peer using near field communication (NFC) or radio frequency identification (RFID) techniques.

The user 11 selects, using the graphical user interface operated via the touch screen display 4, on his mobile electronic device 1 an NFC or RFID payment communication path to a point of sale 20 merchant or another electronic mobile device 21 equipped with respective NFC or RFID means (Step S501). Needless to say that the user's 11 mobile electronic device, in this embodiment, is also equipped with an NFC and/or RFID transmitter/receiver as known per se from the prior art. Optionally, establishing the NFC or RFID payment communication path may be controlled by the payment app.

The point of sale 20 or other user's electronic mobile device 21 sends a payment request to the gateway system on the remote server 13 (Step S502). The gateway system sends, via the wireless network 14, a payment notification message to the user's 11 mobile electronic device 1 (Step S503).

The user 11 selects the notification message on the touch screen display 4. The user can accept the payment and enter his individual password to access a menu displayed on the display 4 for selecting his desired payment method (i.e. payment instrument), e.g. credit card payment, and accept to send the details for authorization, and the electronic mobile device 1 sends the payment details to the payment processing company 16 for authorization (Step S504). As is clear from the above, in order to access the respective token data set required for authorization and stored on the mobile electronic device 1, a respective key is used created from the device key, the individual password and the verifying data provided by the gateway system (remote server 13).

The gateway system connects with the payment processing company 16 corresponding to the selected payment method (Step S505) and receives an authorization response from the respective payment processing company 16 (Step S506). Upon successful authorization, the gateway system sends an authorization response to the merchant, i.e. the point of sale 20, or the other user's electronic mobile device 21, respectively (Step S507).

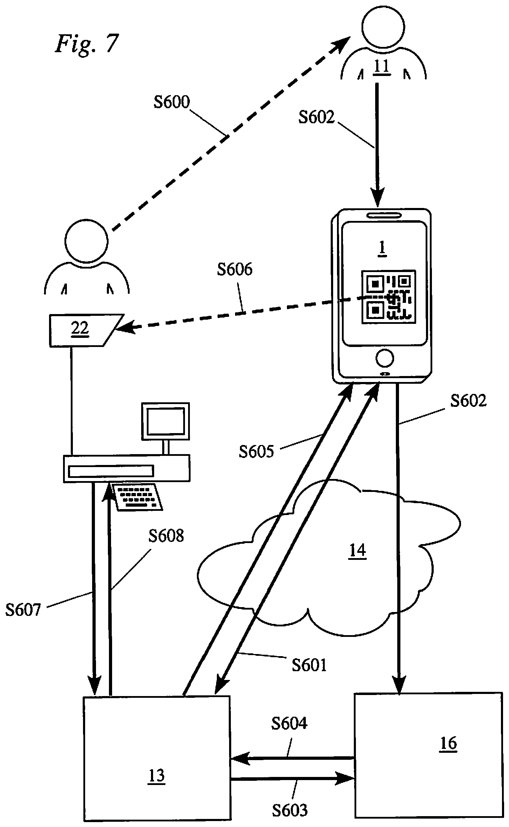

Fig. 7 shows flow scheme of a payment transaction at a point of sale 20 or peer to peer using matrix bar code or quick response code (QR) techniques.

The user 11 receives an invoice or bill from a merchant or from another person (Step S600). The user 11 starts the payment app e.g. by finger-pointing a respective icon on the touch screen display 4. The user 11 has to enter his individual password to select matrix bar code voucher mode and to access a menu displayed on the display 4 for selecting his desired payment method (i.e. payment instrument), e.g. credit card, and initiates sending the details (i.e. a respective token data set) for authorization. As is clear from the above, in order to access the respective token data set required for authorization and stored on the mobile electronic device 1, a respective key is used created from the device key, the individual password and the verifying data provided (Step S601) by the gateway system (remote server 13). The electronic mobile device 1 connects via the wireless network 14 to the payment processing company 16 and sends the payment details for authorization (Step S602).

The gateway system connects with the payment processing company 16 corresponding to the selected payment method (Step S603) and receives an authorization response from the respective payment processing company 16 (Step S604). Upon successful authorization, the gateway system creates display data for displaying a matrix bar code voucher and sends the display data to the user's 11 electronic mobile device 1 (Step S605). Based on the display data, the user's 11 electronic mobile device 1 creates a matrix bar code voucher for the desired amount on the display 4, which the user can show to the merchant or other person (Step S606).

The merchant or other person scans the matrix bar code voucher using a matrix bar code reader 22 that sends it to the gateway system on the remote server 13 (Step S607). The gateway system validates and verifies the scanned matrix bar code and sends authorization response to the merchant or other person (Step S608).

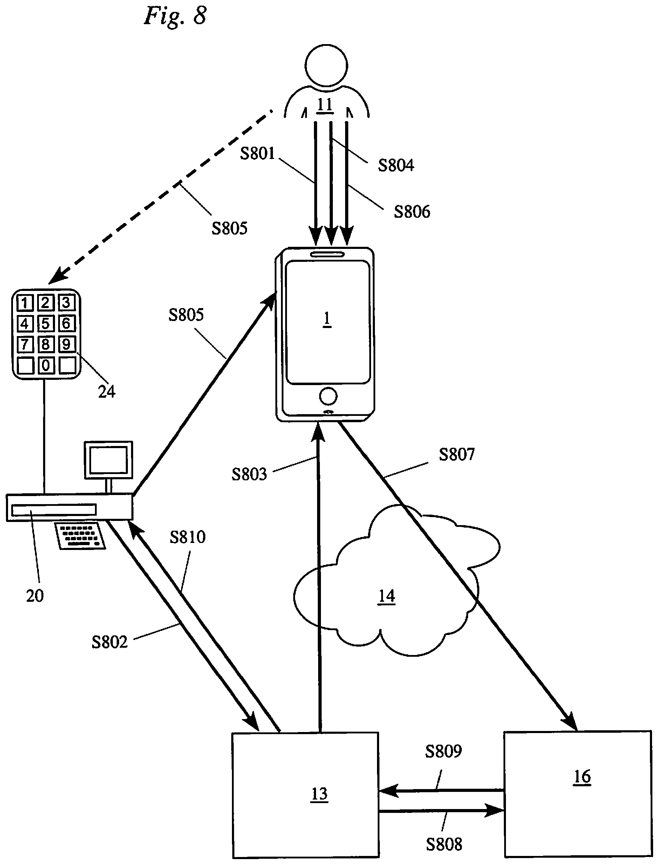

Fig. 8 shows a flow scheme of a payment transaction at a point of sale using near field communication (NFC) or radio frequency identification (RFID) techniques.

The user 11 selects, using the graphical user interface operated via the touch screen display 4, on his mobile electronic device 1 an NFC or RFID payment communication path to a point of sale 20 merchant with respective NFC or RFID means (Step S801). Needless to say that the user's 11 mobile electronic device, in this embodiment, is equipped with an NFC and/or RFID transmitter/receiver as known per se from the prior art. Optionally, establishing the NFC or RFID payment communication path may be controlled by the payment app.

The point of sale 20 or other user's electronic mobile device 21 sends a payment request to the gateway system on the remote server 13 (Step S802). The gateway system sends, via the wireless network 14, a payment notification message to the user's 11 mobile electronic device 1 (Step S803). The user can accept the payment (Step S804) and will be prompted to enter his user PIN on the PIN pad (key pad) 24 of the point of sale terminal 20. Upon entering the PIN, the PIN will be transferred by way of NFC or RFID to the mobile electronic device 1 (Step S805) causing a menu on the display 4 to open for selecting his desired payment method (i.e. payment instrument), e.g. credit card payment (Step S806). The electronic mobile device 1 sends the selected payment details to the payment processing company 16 for authorization (Step S807). As is clear from the above, in order to access the respective token data set required for authorization and stored on the mobile electronic device 1, a respective key is used created from the device key, the entered user PIN and the verifying data provided by the gateway system (remote server 13).

The gateway system connects with the payment processing company 16 corresponding to the selected payment method (Step S808) and receives an authorization response from the respective payment processing company 16 (Step S809). Upon successful authorization, the gateway system sends an authorization response to the merchant, i.e. the point of sale 20 (Step S810).

## Claims

1. Mobile electronic device (1) comprising
wireless communication means (5, 6, 7) for connecting to a wireless network (14), memory means (2) for storing data,
encryption and decryption means for encrypting and decrypting data stored in said memory means,
said data including, in encrypted form, a plurality of token data sets for enabling a user's (11) authorization for an electronic transaction, wherein token data sets of said plurality of token data sets are adapted for mutually different transactions,
enabling means for establishing, via said wireless communication means (5, 6, 7) and said wireless network (14), a connection to a remote server (13) for verifying said user's (11) authentication to access said token data sets and for enabling access to said token data sets, if said user's authentication is verified,
selection means for allowing a user to select a token data set from said plurality of token data sets for access, and
output means for outputting authorizing information for authorizing an electronic transaction based on said selected token data set,
wherein said mobile electronic device has stored thereon a device specific ID, and verifying said user's authentication is based on said device specific ID, a personal ID to be input by said user and verifying data supplied by said remote server (13),
**characterized in that**
said enabling means comprises key generating means for generating a key necessary for decrypting said token data sets, wherein said key is generated from said device specific ID, said personal ID and said verifying data.

2. Mobile electronic device (1) according to claim 1, wherein said output means include means for transmitting said authorizing information via said wireless communication means (5, 6, 7) and said wireless network (14).

3. Mobile electronic device (1) according to any of the preceding claims, wherein said mobile electronic device (1) has stored thereon a first app for initiating contact with said remote server (13) and a second app for generating said key, allowing the user (11) to select a token data set from said plurality of token data sets for access, and outputting said authorizing information.

4. System for authenticating a user (11) for an electronic transaction, said system comprising a mobile electronic device (1) according to any of the preceding claims and said remote server (13).

5. System according to claim 4, wherein said token data sets and/or said key are not stored on said remote server (13).

6. System according to any of claims 4 or 5, further comprising a plurality of transaction site servers (16), wherein each of said transaction site servers (16) has stored thereon a complementary data set corresponding to one of said token data sets.

7. System according to claim 6, wherein said transaction site servers (16) are adapted to receive said authorizing information from said mobile electronic device (1) and to transmit an authorization response from said transaction site server (16) to said remote server (13).

8. System according to any of claims 4-7, further comprising
an external terminal (20) including user ID input means (24) for inputting a user ID,
transfer means for transferring the input user ID from said external terminal (20) to said mobile device (1),
wherein verifying said user's authentication makes use of said input user ID.

9. Method of authorizing a user for an electronic transaction,
said method comprising the steps of
establishing, via a mobile electronic device (1) connected to a wireless network (14), a connection to a remote server (13) for verifying said user's (11) authentication to access a plurality of token data sets stored, in encrypted form, in said mobile electronic device (1), wherein verifying said user's authentication is based on a device specific ID stored in said mobile electronic device (1), a personal ID to be input by said user and verifying data supplied by said remote server (13),
enabling access to said token data sets, if said user's (1) authentication is verified, selecting, among said plurality of token data sets, a token data set,
outputting authorizing information for authorizing an electronic transaction based on said selected token data set,
wherein token data sets of said plurality of token data sets are adapted for mutually different transactions,
**characterized in that** said method comprises a step of generating a key for decrypting said token data sets from said device specific ID, said personal ID and said verifying data.

10. Method according to claim 9, wherein said token data sets and/or said key are not stored on or transmitted through said remote server (13).

11. Method according to any of claims 9 or 10, wherein said authorizing information is transmitted to a transaction site server (16) having stored thereon a complementary data set corresponding to one of said token data sets, wherein said authorizing information is not transmitted via said remote server (13).

12. Method according to claim 11, wherein said method further comprises transmitting an authorization response from said transaction site server (16) to said remote server (13).

13. Method according to any of claims 9-12, wherein a first app stored on said mobile electronic device (1) is used for initiating contact with said remote server (13) and a second app stored on said mobile electronic device (1) is used for generating said key, allowing the user (11) to select a token data set from said plurality of token data sets for access, and outputting said authorizing information.

14. Method for registering a user (11) for authorizing said user for electronic transactions, said method comprising the steps of
establishing, via a mobile electronic device (1) connected to a wireless network, a connection to a remote server (13),
storing on said mobile electronic device (1), in encrypted form, a plurality of token data sets for authorizing said user in said electronic transactions,
wherein token data sets of said plurality of token data sets are adapted for mutually different transactions
characterized in thats aid method further comprises the steps of
creating, on said remote server (13), a server key using a personal ID specific to said user and/or a device specific ID stored on said mobile electronic device (1),
said token data sets are stored such that they are accessible only using a key generated from said server key, personal ID and device specific ID, said key not being stored on said remote server (13).

15. Method according to claim 14, wherein said method further includes downloading, from said remote server (13) to said mobile electronic device, an app for generating said key, allowing the user to select a token data set from said plurality of token data sets for access, and outputting authorizing information for authorizing an electronic transaction based on said selected token data set.

## Patentansprüche

1. Mobiles elektronisches Gerät (1), aufweisend:
drahtlose Kommunikationsmittel (5, 6, 7) zur Verbindung mit einem drahtlosen Netzwerk (14),
Speichermittel (2) zum Speichern von Daten,
Verschlüsselungs- und Entschlüsselungsmittel zum Verschlüsseln und Entschlüsseln in den Speichermitteln gespeicherter Daten,
wobei die Daten mehrere Token-Datensätze in verschlüsselter Form beinhalten, um eine Autorisierung eines Benutzers (11) für eine elektronische Transaktion zu ermöglichen, wobei Token-Datensätze der mehreren Token-Datensätze für voneinander verschiedene Transaktionen angepasst sind,
Freigabemittel zum Herstellen einer Verbindung zu einem entfernten Server (13) über die drahtlosen Kommunikationsmittel (5, 6, 7) und das drahtlose Netzwerk (14) zum Überprüfen der Authentifizierung des Benutzers (11) zum Zugreifen auf die Token-Datensätze und zur Freigabe eines Zugriffs auf die Token-Datensätze, wenn die Authentifizierung des Benutzers überprüft ist,
Auswahlmittel, um es einem Benutzer zu ermöglichen, aus den mehreren Token-Datensätzen zum Zugriff einen Token-Datensatz auszuwählen, und
Ausgabemittel zum Ausgeben von Autorisierungsinformationen zum Autorisieren einer elektronischen Transaktion auf Basis des ausgewählten Token-Datensatzes,
wobei auf dem mobilen elektronischen Gerät eine gerätespezifische ID gespeichert ist und die Überprüfung der Authentifizierung des Benutzers auf der gerätespezifischen ID, einer von dem Benutzer einzugebenden persönlichen ID und von dem entfernten Server (13) gelieferten Überprüfungsdaten basiert,
**dadurch gekennzeichnet, dass**
die Freigabemittel Schlüsselerzeugungsmittel zum Erzeugen eines Schlüssels aufweisen, der zum Entschlüsseln der Token-Datensätze benötigt wird, wobei der Schlüssel aus der gerätespezifischen ID, der persönlichen ID und den Überprüfungsdaten erzeugt wird.

2. Mobiles elektronisches Gerät (1) gemäß Anspruch 1, wobei die Ausgabemittel Mittel zum Übertragen der Autorisierungsinformationen über die drahtlosen Kommunikationsmittel (5, 6, 7) und das drahtlose Netzwerk (14) beinhalten.

3. Mobiles elektronisches Gerät (1) gemäß einem der vorhergehenden Ansprüche, wobei auf dem mobilen elektronischen Gerät (1) eine erste App zum Einleiten eines Kontakts mit dem entfernten Server (13) und eine zweite App zum Erzeugen des Schlüssels, wodurch es dem Benutzer (11) erlaubt wird, einen Token-Datensatz aus den mehreren Token-Datensätzen zum Zugriff auszuwählen, sowie zum Ausgeben der Autorisierungsinformationen gespeichert sind.

4. System zum Authentifizieren eines Benutzers (11) für eine elektronische Transaktion, wobei das System ein mobiles elektronisches Gerät (1) gemäß einem der vorhergehenden Ansprüche und den entfernten Server (13) aufweist.

5. System gemäß Anspruch 4, wobei die Token-Datensätze und/oder der Schlüssel nicht auf dem entfernten Server (13) gespeichert sind.

6. System gemäß Anspruch 4 oder 5, ferner aufweisend mehrere Transaktions-Site-Server (16), wobei auf jedem der Transaktions-Site-Server (16) ein komplementärer Datensatz gespeichert ist, der einem der Token-Datensätze entspricht.

7. System gemäß Anspruch 6, wobei die Transaktions-Site-Server (16) dazu angepasst sind, die Autorisierungsinformationen von dem mobilen elektronischen Gerät (1) zu empfangen und eine Autorisierungsantwort von dem Transaktions-Site-Server (16) an den entfernten Server (13) zu übertragen.

8. System gemäß einem der Ansprüche 4 bis 7, ferner aufweisend:
ein externes Endgerät (20), das Benutzer-ID-Eingabemittel (24) zum Eingeben einer Benutzer-ID beinhaltet,
Übertragungsmittel zum Übertragen der eingegebenen Benutzer-ID von dem externen Endgerät (20) an das mobile Gerät (1),
wobei eine Überprüfung der Authentifizierung des Benutzers die eingegebene Benutzer-ID nutzt.

9. Verfahren zum Autorisieren eines Benutzers für eine elektronische Transaktion,
wobei das Verfahren die folgenden Schritte aufweist:
Herstellen einer Verbindung zu einem entfernten Server (13) über ein mobiles elektronisches Gerät (1), das mit einem drahtlosen Netzwerk (14) verbunden ist, zum Überprüfen einer Authentifizierung des Benutzers (11) zum Zugreifen auf mehrere Token-Datensätze, die in verschlüsselter Form in dem mobilen elektronischen Gerät (1) gespeichert sind, wobei ein Überprüfen der Authentifizierung des Benutzers auf einer gerätespezifischen ID, die in dem mobilen elektronischen Gerät (1) gespeichert ist, einer persönlichen ID, die von dem Benutzer einzugeben ist, und Überprüfungsdaten, die von dem entfernten Server (13) geliefert werden, basiert,
Freigeben eines Zugriffs auf die Token-Datensätze, wenn die Authentifizierung des Benutzers (1) überprüft ist,
Auswählen eines Token-Datensatzes aus den mehreren Token-Datensätzen,
Ausgeben von Autorisierungsinformationen zum Autorisieren einer elektronischen Transaktion auf Basis des ausgewählten Token-Datensatzes,
wobei Token-Datensätze der mehreren Token-Datensätze für voneinander verschiedene Transaktionen angepasst sind,
**dadurch gekennzeichnet, dass** das Verfahren einen Schritt zum Erzeugen eines Schlüssels zum Entschlüsseln der Token-Datensätze aus der gerätespezifischen ID, der persönlichen ID und den Überprüfungsdaten aufweist.

10. Verfahren gemäß Anspruch 9, wobei die Token-Datensätze und/oder der Schlüssel auf dem entfernten Server (13) nicht gespeichert oder über diesen übertragen werden.

11. Verfahren gemäß einem der Ansprüche 9 oder 10, wobei die Autorisierungsinformationen an einen Transaktions-Site-Server (16) übertragen werden, auf dem ein komplementärer Datensatz gespeichert ist, der einem der Token-Datensätzen entspricht, wobei die Autorisierungsinformationen nicht über den entfernten Server (13) übertragen werden.

12. Verfahren gemäß Anspruch 11, wobei das Verfahren ferner ein Übertragen einer Autorisierungsantwort von dem Transaktions-Site-Server (16) an den entfernten Server (13) aufweist.

13. Verfahren gemäß einem der Ansprüche 9 bis 12, wobei eine erste App, die auf dem mobilen elektronischen Gerät (1) gespeichert ist, zum Einleiten eines Kontakts mit dem entfernten Server (13) verwendet wird, und eine zweite App, die auf dem mobilen elektronischen Gerät (1) gespeichert ist, zum Erzeugen des Schlüssels, wodurch es dem Benutzer (11) erlaubt wird, einen Token-Datensatz aus den mehreren Token-Datensätzen zum Zugriff auszuwählen, sowie zum Ausgeben der Autorisierungsinformationen verwendet wird.

14. Verfahren zum Registrieren eines Benutzers (11) zum Autorisieren des Benutzers für elektronische Transaktionen, wobei das Verfahren die folgenden Schritte aufweist:
Herstellen einer Verbindung zu einem entfernten Server (13) über ein mobiles elektronisches Gerät (1), das mit einem drahtlosen Netzwerk verbunden ist,
Speichern mehrerer Token-Datensätze auf dem mobilen elektronischen Gerät (1) in verschlüsselter Form, um den Benutzer in den elektronischen Transaktionen zu autorisieren,
wobei Token-Datensätze der mehreren Token-Datensätze für voneinander verschiedene Transaktionen angepasst sind,
**dadurch gekennzeichnet, dass** das Verfahren die folgenden Schritte aufweist:
Erzeugen eines Serverschlüssels unter der Verwendung einer persönlichen ID, die für den Benutzer spezifisch ist, und/oder einer gerätespezifischen ID, die in dem mobilen elektronischen Gerät (1) gespeichert ist, auf dem entfernten Server (13),
wobei die Token-Datensätze so gespeichert sind, dass sie nur unter der Verwendung eines Schlüssels zugänglich sind, der aus dem Serverschlüssel, der persönlichen ID und gerätespezifischen ID erzeugt wird, wobei der Schlüssel nicht auf dem entfernten Server (13) gespeichert wird.

15. Verfahren gemäß Anspruch 14, wobei das Verfahren ferner aufweist:
Herunterladen einer App zum Erzeugen des Schlüssels von dem entfernten Server (13) auf das mobile elektronische Gerät, Ermöglichen für den Benutzer, aus den mehreren Token-Datensätzen zum Zugriff einen Token-Datensatz auszuwählen, und Ausgeben von Autorisierungsinformationen zum Autorisieren einer elektronischen Transaktion auf Basis des ausgewählten Token-Datensatzes.

## Revendications

1. Dispositif électronique mobile (1) comprenant un moyen de communication sans fil (5, 6, 7) pour se connecter à un réseau sans fil (14),
un moyen de mémoire (2) pour stocker des données, un moyen de chiffrement et de déchiffrement pour chiffrer et déchiffrer des données stockées dans ledit moyen de mémoire,
lesdites données comportant, sous forme chiffrée, une pluralité d'ensembles de données à jeton pour activer une autorisation d'utilisateur (11) pour une transaction électronique, dans lequel des ensembles de données à jeton de ladite pluralité d'ensembles de données à jeton sont adaptés pour des transactions mutuellement différentes,
un moyen d'activation pour établir, via ledit moyen de communication sans fil (5, 6, 7) et ledit réseau sans fil (14), une connexion à un serveur à distance (13) pour vérifier ladite authentification d'utilisateur (11) afin d'accéder auxdits ensembles de données à jeton et pour activer un accès auxdits ensembles de données à jeton, si ladite authentification d'utilisateur est vérifiée,
un moyen de sélection pour permettre à un utilisateur de sélectionner un ensemble de données à jeton parmi ladite pluralité d'ensembles de données à jeton pour un accès, et
un moyen de sortie pour fournir en sortie des informations d'autorisation pour autoriser une transaction électronique d'après ledit ensemble de données à jeton sélectionné,
dans lequel est stocké sur ledit dispositif électronique mobile un identifiant spécifique au dispositif, et la vérification de ladite authentification d'utilisateur est basée sur ledit identifiant spécifique au dispositif, un identifiant personnel à entrer par ledit utilisateur et des données de vérification fournies par ledit serveur à distance (13),
**caractérisé en ce que**
ledit moyen d'activation comprend un moyen de génération de clé pour générer une clé nécessaire pour déchiffrer lesdits ensembles de données à jeton, dans lequel ladite clé est générée à partir dudit identifiant spécifique au dispositif, dudit identifiant personnel et desdites données de vérification.

2. Dispositif électronique mobile (1) selon la revendication 1, dans lequel ledit moyen de sortie comporte un moyen pour transmettre lesdites informations d'autorisation via ledit moyen de communication sans fil (5, 6, 7) et ledit réseau sans fil (14).

3. Dispositif électronique mobile (1) selon l'une quelconque des revendications précédentes, dans lequel sont stockées sur ledit dispositif électronique mobile (1) une première application pour initier un contact avec ledit serveur à distance (13) et une seconde application pour générer ladite clé, permettre à l'utilisateur (11) de sélectionner un ensemble de données à jeton parmi ladite pluralité d'ensembles de données à jeton pour un accès, et fournir en sortie lesdites informations d'autorisation.

4. Système d'authentification d'un utilisateur (11) pour une transaction électronique, ledit système comprenant un dispositif électronique mobile (1) selon l'une quelconque des revendications précédentes et ledit serveur à distance (13).

5. Système selon la revendication 4, dans lequel lesdits ensembles de données à jeton et/ou ladite clé ne sont pas stockés sur ledit serveur à distance (13).

6. Système selon l'une quelconque des revendications 4 ou 5, comprenant en outre une pluralité de serveurs de site de transaction (16), dans lequel est stocké sur chacun desdits serveurs de site de transaction (16) un ensemble de données complémentaires correspondant à l'un desdits ensembles de données à jeton.

7. Système selon la revendication 6, dans lequel lesdits serveurs de site de transaction (16) sont adaptés pour recevoir lesdites informations d'autorisation en provenance dudit dispositif électronique mobile (1) et pour transmettre une réponse d'autorisation dudit serveur de site de transaction (16) audit serveur à distance (13).

8. Système selon l'une quelconque des revendications 4 à 7, comprenant en outre
un terminal externe (20) comportant un moyen d'entrée d'identifiant d'utilisateur (24) pour entrer un identifiant d'utilisateur,
un moyen de transfert pour transférer l'identifiant d'utilisateur entré dudit terminal externe (20) audit dispositif mobile (1),
dans lequel la vérification de ladite authentification d'utilisateur utilise ledit identifiant d'utilisateur entré.

9. Procédé d'autorisation d'un utilisateur pour une transaction électronique, ledit procédé comprenant les étapes
d'établissement, via un dispositif électronique mobile (1) connecté à un réseau sans fil (14), d'une connexion à un serveur à distance (13) pour vérifier ladite authentification d'utilisateur (11) afin d'accéder à une pluralité d'ensembles de données à jeton stockés, sous forme chiffrée, dans ledit dispositif électronique mobile (1), dans lequel la vérification de ladite authentification d'utilisateur est basée sur un identifiant spécifique au dispositif stocké dans ledit dispositif électronique mobile (1), un identifiant personnel à entrer par ledit utilisateur et des données de vérification fournies par ledit serveur à distance (13),
d'activation d'accès auxdits ensembles de données à jeton, si ladite authentification d'utilisateur est vérifiée,
de sélection, parmi ladite pluralité d'ensembles de données à jeton, d'un ensemble de données à jeton,
de fourniture en sortie d'informations d'autorisation pour autoriser une transaction électronique d'après ledit ensemble de données à jeton sélectionné,
dans lequel des ensembles de données à jeton de ladite pluralité d'ensembles de données à jeton sont adaptés pour des transactions mutuellement différentes,
**caractérisé en ce que** ledit procédé comprend une étape de génération d'une clé pour déchiffrer lesdits ensembles de données à jeton à partir dudit identifiant spécifique au dispositif, dudit identifiant personnel et desdites données de vérification.

10. Procédé selon la revendication 9, dans lequel lesdits ensembles de données à jeton et/ou ladite clé ne sont pas stockés sur ou transmis par l'intermédiaire dudit serveur à distance (13).

11. Procédé selon l'une quelconque des revendications 9 ou 10, dans lequel lesdites informations d'autorisation sont transmises à un serveur de site de transaction (16) sur lequel est stocké un ensemble de données complémentaires correspondant à l'un desdits ensembles de données à jeton, dans lequel lesdites informations d'autorisation ne sont pas transmises via ledit serveur à distance (13).

12. Procédé selon la revendication 11, dans lequel ledit procédé comprend en outre la transmission d'une réponse d'autorisation dudit serveur de site de transaction (16) audit serveur à distance (13).

13. Procédé selon l'une quelconque des revendications 9 à 12, dans lequel une première application stockée sur ledit dispositif électronique mobile (1) est utilisée pour initier un contact avec ledit serveur à distance (13) et une seconde application stockée sur ledit dispositif électronique mobile (1) est utilisée pour générer ladite clé, permettre à l'utilisateur (11) de sélectionner un ensemble de données à jeton parmi ladite pluralité d'ensembles de données à jeton pour un accès, et fournir en sortie lesdites informations d'autorisation.

14. Procédé d'enregistrement d'un utilisateur (11) pour autoriser ledit utilisateur pour des transactions électroniques, ledit procédé comprenant les étapes
d'établissement, via un dispositif électronique mobile (1) connecté à un réseau sans fil, d'une connexion à un serveur à distance (13),
de stockage sur ledit dispositif électronique mobile (1), sous forme chiffrée, d'une pluralité d'ensembles de données à jeton pour autoriser ledit utilisateur dans lesdites transactions électroniques,
dans lequel les ensembles de données à jeton de ladite pluralité d'ensembles de données à jeton sont adaptés pour des transactions mutuellement différentes,
**caractérisé en ce que** ledit procédé comprend en outre les étapes
de création, sur ledit serveur à distance (13), d'une clé de serveur à l'aide d'un identifiant personnel spécifique audit utilisateur et/ou d'un identifiant spécifique au dispositif stocké sur ledit dispositif électronique mobile (1),
lesdits ensembles de données à jeton sont stockés de façon à être accessibles uniquement à l'aide d'une clé générée à partir de ladite clé de serveur, dudit identifiant personnel et dudit identifiant spécifique au dispositif, ladite clé n'étant pas stockée sur ledit serveur à distance (13).

15. Procédé selon la revendication 14, dans lequel ledit procédé comporte en outre le téléchargement, dudit serveur à distance (13) audit dispositif électronique mobile, d'une application pour générer ladite clé, permettre à l'utilisateur de sélectionner un ensemble de données à jeton parmi ladite pluralité d'ensembles de données à jeton pour un accès, et fournir en sortie des informations d'autorisation pour autoriser une transaction électronique d'après ledit ensemble de données à jeton sélectionné.
